# EUROPEAN PATENT APPLICATION

(11) **EP 4 506 675 A1**
(43) Date of publication of application: **12.02.2025**
(21) Application number: 23191095.1
(22) Date of filing: 11.08.2023
(51) Int. Cl.: G01M 13/045, G01H 1/00

(54) **SENSOR FOR MONITORING BEARINGS**

(71) Applicant: ABB SCHWEIZ AG, 5400 Baden (CH)
(72) Inventor: Danci, Alex, 65320 Vaasa (FI); Ikäheimo, Jouni, 65320 Vaasa (FI)
(74) Representative: Kolster Oy Ab

(57) **Abstract**

To monitor bearings arranged on a motor frame and supporting a rotating shaft of an electric motor within the motor frame, a sensor comprising at least a first vibration measuring element and a second vibration measuring element to measure vibration simultaneously is mounted on the motor frame so that the first vibration measuring element and the second vibration measuring element are in contact with the motor frame. The sensor is positioned so that the first vibration measuring element is nearer one of the bearings and the second vibration measuring element is nearer the other one of the bearings for the sensor to determine, when one of the bearings is degrading, which one is degrading.

## Description

### FIELD

The present invention relates to monitoring bearings, and more precisely monitoring bearings arranged on a motor frame and accommodating a rotating shaft of an electric motor within the motor frame.

### BACKGROUND ART

Electric motors are used across industries. For example, electric motors are used for driving conveyors, grinders, winders, pumps, lifts, compressors, agitators, fans, etc. As electric motors are critical components, unexpected motor failures should be avoided. A bearing failure is the most common cause for a motor failure, and monitoring bearings, or bearing conditions, is important to determine when repairs or replacements are needed. To determine which bearing is degrading, to avoid unnecessary repairs or replacements, there is usually a sensor per a bearing, the sensor being installed near the bearing. In other words, if there are two bearings, there are two sensors, for example one sensor near drive end bearing and one sensor near non-drive end bearing. Solutions enabling to reduce the number of sensors while still obtaining information which bearing is degrading, are desired.

### SUMMARY

The invention relates to an arrangement, a method, and a sensor, as defined in the independent claims. Further embodiments are disclosed in the dependent claims.

A general aspect introduces use of one sensor with two vibration measuring elements to determine, whether any bearing is degrading, and which bearing is degrading.

### BRIEF DESCRIPTION OF THE DRAWINGS

In the following, exemplary embodiments will be described in greater detail with reference to accompanying drawings, in which
Figures 1 and 2 are schematic block diagram illustrating examples of a sensor;
Figures 3 and 4 are block diagrams illustrating an example arrangement; and
Figures 5 and 6 are flow chart illustrating examples of functionalities.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any system or arrangement that comprises one or more electrical motors, or corresponding apparatuses converting electricity into mechanical energy, that are supported by bearings arranged on a motor frame to which a sensor may be mounted, regardless of the use of an electrical motor, or shortly motor.

An applicable sensor comprises at least a first vibration measuring element and a second vibration measuring element to measure vibration of the motor frame, means for obtaining first vibration values from vibration measured by the first vibration measuring element and second vibration values from vibration measured by the second vibration measuring element, and means for determining, based at least on a first vibration value and a second vibration value at time t, a status indicating operation condition of the bearings, and when the status indicates a degrading operation condition, which one of the first bearing and the second bearing is degrading.

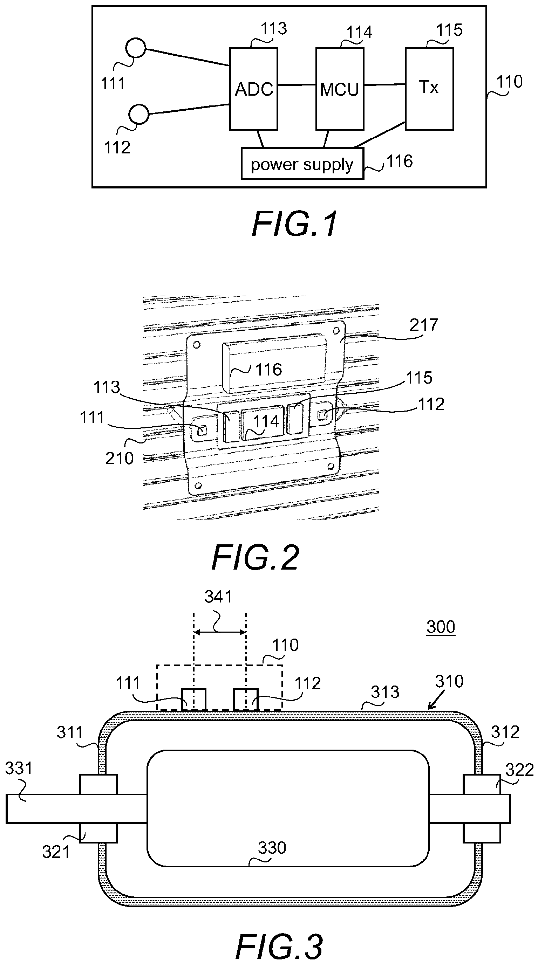

Figure 1 is a schematic block diagram illustrating an example of such a sensor, and more precisely an example layout of different units the sensor may comprise. In the illustrated example, the sensor is arranged to communicate with an online condition monitoring system (not illustrated in Figure 1) involving one or more mobile devices, like smart phones and/or one or more servers, or computers, and displays, for example in a control room or service center that may locate in the site were the electric motor is and/or in a remote location.

Referring to Figure 1, in the illustrated example a sensor 110 comprises at least a first vibration measuring element 111 and a second vibration measuring element 112 to measure vibration. The vibration measuring elements are separate elements locating at a distance from each other. The vibration measuring elements may be accelerometers, for example micromechanical accelerometers or mechanical accelerometers, such as micro-electro-mechanical systems (MEMS) accelerometers.

Further, in the illustrated example of Figure 1, the sensor 110 comprises an analog-to-digital converter (ADC) 113 as said means for obtaining, a microcontroller (MCU) 114 as said means for determining, and a transmitter (Tx) 115.

The analog-to-digital converter 113 is connected to the first vibration measuring element 111 and to the second vibration measuring element 112, and is configured to simultaneously sample the vibration measured by the first measuring element to the first vibration values and the vibration measured by the second measuring element to the second vibration values. For example, a sampling speed of the analog-to-digital converter 113 may be 500 000 to 1000 000 analog samples per a second. The analog-to-digital converter 113 is further connected to the microcontroller 114 which receives the vibration values.

The microcontroller 114 is configured to determine operation condition status based on the vibration values, and when the status indicates the degrading operation condition, which one of the first bearing and the second bearing is degrading. More precisely, the microcontroller 114 contains, on a single chip, one or more processors, for example central processing units, a memory for storing at least program instructions for the processor to determine whether a bearing is degrading and which bearing is degrading, and input/output peripherals. It should be appreciated that instead of a microcontroller, any corresponding circuitry may be used. In the illustrated example of Figure 1, the microcontroller 114 is connected to the transmitter 115 to at least output a bearing fault alert, or a corresponding alarm, which indicates which one of the bearings is degrading.

In the example of Figure 1, the transmitter 115 represents an interface via which at least the fault alert is communicated to the condition monitoring system either over a wired or wireless connection(s), or any combinations thereof. Any existing or future communication technology, wired or wireless or their combination, may be used for communicating the fault alert. A non-limiting list of examples of wired connections for which the transmitter may be wired include Ethernet, RS485, Modbus, and a control area network (CAN) bus. A non-limiting list of examples of wireless connections which the transmitter 115 may support include LTE (long term evolution), 4G (fourth generation), 5G (fifth generation), 5G NR (new radio), 6G (sixth generation), and beyond generations, Bluetooth^{®}, WLAN (wireless local area network) e.g. Wi-Fi, Li-Fi (light fidelity), LoRa (long range), NB-IoT (narrowband Internet of Things) and infrared light. Naturally, the sensor 110 may comprise instead of the transmitter 115, a transceiver to transmit at least the bearing fault alert(s) to the condition monitoring system. However, it should be appreciated that at the simplest, an interface outputting information of a degrading bearing may be two led lamps or flip-dots, for example, wherein when a bearing is degrading a led lamp or flip-dot closer to the bearing may be lightened or flipped from black to color.

In the illustrated example of Figure 1, the sensor 110 further comprises a power supply 116, for example a rechargeable or replaceable battery, connected to the analog-to-digital converter 113, the microcontroller 114 and the transmitter 115 to supply power to them. However, any other way to supply power may be used. For example any of the units, or circuits, may comprise an internal power supply, or harvest energy from the environment or the motor itself.

In the example of Figure 2, the sensor comprises the same units as in the example of Figure 1. Referring to Figure 2, the sensor comprises an enclosure, Figure 2 showing a part 217 of the enclosure within which the first vibration measuring element 111, the second vibration measuring element 112, the analog-to-digital converter 113, the microcontroller 114, the transmitter 115 and the power supply 116 are installed. The sensor is mounted on a motor frame so that the first vibration measuring element 111 and the second vibration measuring element 112 are in contact with the motor frame, e.g. via a cooling rib 210 of an electric motor, and thereby the vibration measuring elements can obtain a good vibration conduction from the motor frame. The one enclosure makes installation of the sensor, and specially installation of the vibration elements, easy or at least easier.

As can be seen from the example of Figure 2, the first vibration measuring element 111 and the second vibration measuring element 112 may be widely-spaced within the enclosure. In other words, the distance between the elements may be a maximum distance allowed by the enclosure.

Figure 3 is a block diagram illustrating an example arrangement.

Referring to Figure 3, the arrangement 300 comprises a motor frame 310 comprising at least a first side 311, a second side 312 opposite to the first side, and a third side 313 between the first side 311 and the second side 312. The first side may be called a first end of the frame, and the second side may be called a second end of the frame. Further, the arrangement 300 comprises a first bearing 321 arranged on the first side 311 of the motor frame and a second bearing 322 arranged on the second side 312 of the motor frame. In other words, the first bearing is at the first end of the frame and the second bearing is at the second end of the frame. The arrangement 300 further comprises an electric motor 330 within the motor frame 310, the electric motor 330 comprising a rotating shaft 331 accommodated by the first bearing 321 and the second bearing 322 to transfer loads from the shaft 331 to the motor frame, and a sensor 110, examples of which are described above. When the electric motor is coupled to a load, the first bearing may be called a drive end bearing, and the second bearing may be called a non-drive end bearing. The first bearing and the second bearing may be identical bearings, or different bearings.

The sensor 110 is mounted on the third side 313 of the motor frame so that the first vibration measuring element 111 and the second vibration measuring element 112 are in contact with the motor frame 310 and the first vibration measuring element 111 is nearer to the first side 311 than the second vibration measuring element 112 and, correspondingly, the second vibration measuring element 112 is nearer to the second side 312 than the first vibration measuring element 112. In other words, the sensor 110 is positioned (mounted) on the motor frame so that the first vibration measuring element 111 is nearer to the first bearing 321 and the second vibration measuring element 112 is nearer the second 322. In the example of Figure 3, the distance 341 between the vibration measuring elements is shorter than the distance from the first vibration measuring element 111 to the first side 311 and shorter than the distance from the second vibration measuring element 112 to the second side 312. However, it should be appreciated that the sensor 110 may be mounted nearer a point in which the first side 311 meets the third side 313, in which case the distance 341 may be longer than the distance from the first vibration measuring element 111 to the first side 311. Correspondingly, the sensor 110 may be mounted nearer a point in which the second side 312 meets the third side 313, in which case the distance 341 may be longer than the distance from the second vibration measuring element 112 to the second side 312. The distance 341, i.e. the physical distance between the first vibration measuring element 111 and the second vibration measuring element 112, may be, for example, 10 cm. When taking into account dimensions of the motor frame, for example the distance between the bearings, and the size of the enclosure of the sensor, one may say that the vibration measuring elements are closely-spaced compared to spacing of the bearings.

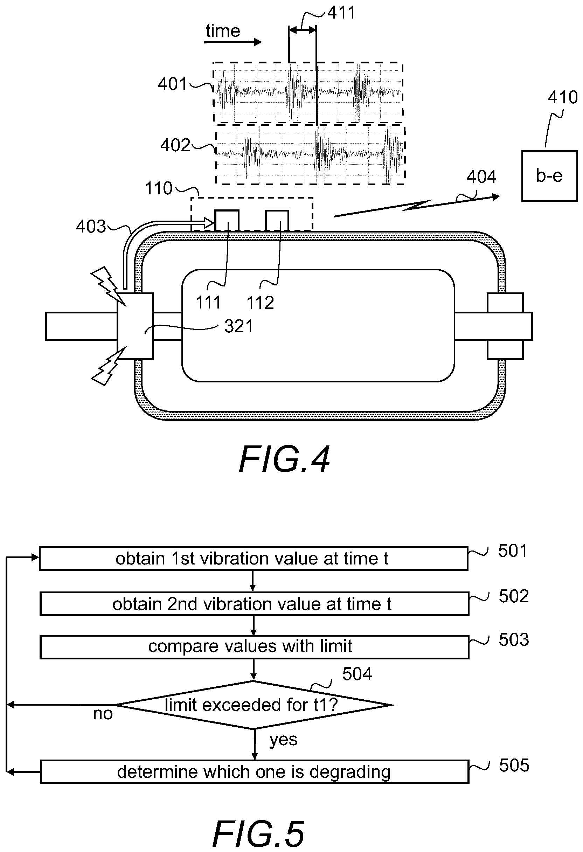

Figure 4 is a block diagram illustrating operation principles of the arrangement of Figure 3 in a situation in which the first bearing is degrading.

Referring to Figure 4, first vibration values 401 and second vibration values 402 are in the example of Figure 4 vibration signatures. When the first bearing 321 is degrading (illustrated by lightning symbols), it will begin to emit increased vibrations 403. These vibrations are conducted in the motor frame and eventually reach the sensor 110. The vibration measuring elements 111, 112 will both sense the vibration indicating degrading, but not at the same instance. Because the first vibration measuring element 111 is closer to the vibrating bearing 321 it will sense increased vibrations 403 earlier than the second vibration measuring element. Since vibrations from both vibration measurement elements are sampled simultaneously, i.e. at the same instance, the vibration signatures 401, 402 can be compared without a time skew. Hence, the vibration signature shown in 401 exceeds a preset operational limit before the vibration signature shown in 402 exceeds the preset operational limit. Thus, a bearing fault alert 404 is transmitted to an online condition monitoring system 410, for example to a back-end (b-e) service running in a server.

Similarly, if the second bearing would be degrading, increased vibration would first be sensed by the second vibration measuring element, resulting that vibration signature 402 would exceed the operation limit before the vibration signature 401.

The time delay 411 is the time it takes for the vibrations to travel the physical distance between the first vibration measuring element 111 and the second vibration measuring element 112. The vibrations are carried in soundwaves, and the different times of arrival of the soundwaves enable sound directional sensing (phonotaxis). Assuming that the motor frame is made of aluminium or cast iron in which the speed of sound is about 3000 m/s, and the physical distance is 10 cm, the time delay will be about 33 microseconds, meaning that a vibration event from a bearing conducted through the motor frame will impinge on one sensor, and then the next 33 microseconds later. That is enough time to detect the different times of arrival.

As is evident from the above, with the disclosed arrangement and the sensors, matching the vibration signatures, or any other kind of vibration value, e.g. waveform, or a peak value, or a certain number of consecutive peak values within a predetermined time (preset time), between the two vibration measuring elements and determining the source direction is an easy, reliable and straightforward task not requiring complex circuitries. Even for identical bearings, a single sensor can sense which bearing is degrading and in need of maintenance.

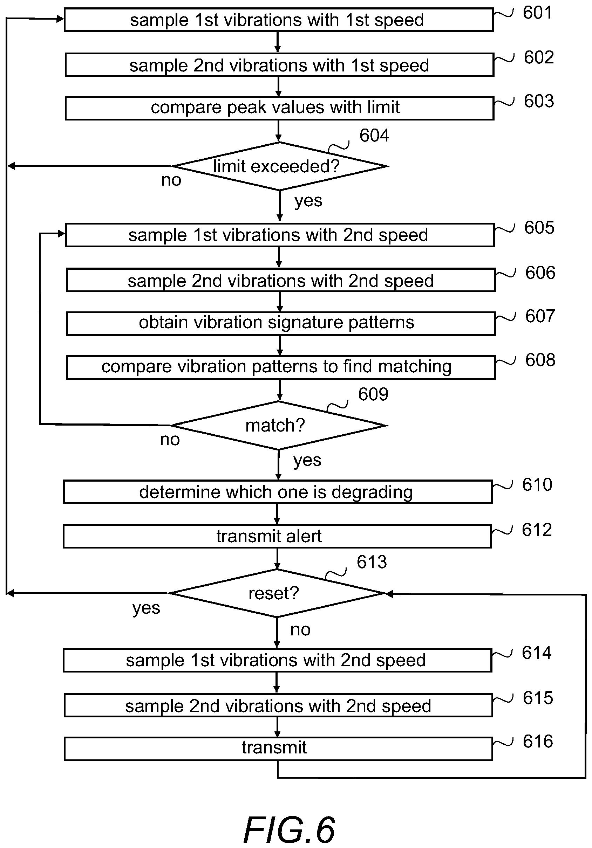

Figures 5 and 6 are flowcharts illustrating different functionalities of the sensor.

Referring to Figure 5, a first vibration value at a time t from vibration of a motor frame measured by a first vibration measuring element at a first location on the motor frame is obtained in step 501. The first location is the location in which the first vibration measuring element is in contact with the motor frame. Simultaneously, a second vibration value at the time t from vibration of the motor frame measured by a second vibration measuring element measured at second location is obtained in step 502. The second location is the location in which the second vibration measuring element is in contact with the motor frame. The first vibration value and the second vibration value are compared in step 503 with a preset operational limit. If the preset operational limit is not exceeded, by the first vibration value or by the second vibration value, for a predetermined t1, (step 504: no), the process return to step 50 1 and continues obtaining vibration values at next time t. If the preset operational limit is exceeded for predetermined time t1 (step 504: yes), it is determined in step 505, which one of the first bearing and the second bearing is degrading, for example based on the first vibration value and the second vibration value at the time t, when the operation limit was first time exceeded, or at the time when the condition in block 504 was fulfilled, which ones of the first vibration values or second vibration values fulfilled the condition. When values are compared, the first bearing is degrading when the first vibration value is higher than the second vibration value, and the second bearing is degrading when the second vibration value is higher than the first vibration value.

Even though not illustrated in Figure 5, the process may comprise, after step 505, i.e. after it has been determined which one of the first bearing and the second bearing is degrading, transmitting a bearing fault alert indicating which one of the first bearing and the second bearing is degrading.

Further, the sensor may be configured to transmit to the online control monitoring system, for example, the first vibration values and the second vibration values when they are obtained, or periodically.

The sensor may continue the functionality of Figure 5, resulting that until the bearing is replaced or repaired, the alerting continues.

Referring to Figure 6, obtaining first vibration values at a first time interval by sampling in step 601 the first vibrations with a first sampling speed, and obtaining second vibration values at the first time interval by sampling in step 602 the second vibrations with the first sampling speed, and comparing in step 603 peak values with the preset vibration limit is repeated as long as the preset vibration limit is not exceeded (step 604: no). The first sampling speed may be 500 000 analog samples per a second.

When the preset vibration limit is exceeded, to capture the vibration signals in more detail to obtain more detailed patterns in vibration signatures, the sampling speed is increased to a second sampling speed. This means that vibration values are obtained at a second time interval. The second sampling speed may be 1 000 000 analog samples per a second.

Hence, the first vibrations are sampled in step 605 with the second sampling speed, and the second vibrations are sampled in step 606 with the second sampling speed. Vibration signature patterns are obtained in step 607 from the sampling results and the vibration signature patterns of the first vibrations are compared with the vibration signature patterns of the second vibrations to find a matching pattern within a time frame. For example, a matching pattern should start within the time delay described with Figure 4. The sampling, obtaining vibration signature patterns and comparing them is repeated in the example of Figure 6 as long as there is not a match (block 609: no).

When there is a match (block 609: yes), it is determined in step 610, which one of the first bearing and the second bearing is degrading, based on the direction wherefrom the earlier pattern of the matching patterns was received. In other words, if the earlier pattern is a vibration signature pattern of the first vibrations, the bearing closer to the first vibration measuring element is degrading, and correspondingly, if the earlier pattern is a vibration signature pattern of the second vibrations, the bearing closer to the second vibration measuring element is degrading.

Then a bearing fault alert indicating which one of the first bearing and the second bearing is degrading is transmitted in step 612.

In the illustrated example, the first vibrations are sampled in step 614 with the second sampling speed, and the second vibrations are sampled in step 615 with the second sampling speed, and the sampling results are transmitted in step 616 as long as the sensor is not reset (step 613: no). This way the condition monitoring system will receive detailed information based on which to determine and schedule maintenance actions, e.g. whether to repair or replace the degrading bearing.

When the sensor is reset (step 613: yes), the process return to steps 601 and 602 to sample vibrations at the first speed.

The sensor may be reset by a reset command transmitted from the online condition monitoring system, for example, or by manually resetting the sensor.

As can be seen from the above example, also for motors with identical bearings, having a single sensor, as opposed to prior art solutions requiring two sensors for two bearings, the disclosed arrangement and the sensors represent a reduction in complexity and cost in physical assets, installation, and maintenance, while being able to deliver more information for economic proactive maintenance than prior art one sensor solutions measuring only vibration.

The steps and related functions described above in Figure 5 and Figure 6 are in no absolute chronological order, and some of the steps may be performed simultaneously, for example steps 501 and 502, or the sampling steps, are performed simultaneously, or in an order differing from the given one. Other functions can also be executed between the steps or within the steps. Some of the steps or part of the steps can also be left out or replaced by a corresponding step or part of the step.

It will be obvious to a person skilled in the art that, as technology advances, the inventive concept may be implemented in various ways. The embodiments are not limited to the examples described above, but may vary within the scope of the claims. Therefore, all words and expressions should be interpreted broadly, as illustrative, not restrictive.

## Claims

1. An arrangement comprising at least:
a motor frame comprising at least a first side, a second side opposite to the first side, and a third side between the first side and the second side;
a first bearing arranged on the first side of the motor frame;
a second bearing arranged on the second side of the motor frame;
an electric motor within the motor frame, the electric motor comprising a rotating shaft accommodated by the first bearing and the second bearing to transfer loads from the shaft to the motor frame;
a sensor comprising at least a first vibration measuring element and a second vibration measuring element to measure vibration of the motor frame, means for obtaining first vibration values from vibration measured by the first vibration measuring element and second vibration values from vibration measured by the second vibration measuring element, and means for determining, based on a first vibration value and a second vibration value at time t, a status indicating operation condition of the bearings, and when the status indicates a degrading operation condition, which one of the first bearing and the second bearing is degrading, wherein
the sensor is mounted on the third side of the motor frame so that the first vibration measuring element and the second vibration measuring element are in contact with the motor frame and the first vibration measuring element is nearer to the first side than the second vibration measuring element and the second vibration measuring element is nearer to the second side than the first vibration measuring element.

2. The arrangement of claim 1, wherein the means for determining are configured to determine that the status indicates the degrading operation condition when at least one of the first and second vibration values exceeds a preset operational limit for a preset time.

3. The arrangement of claim 1 or 2, wherein the sensor device further comprises one or more interfaces at least to output, when the status indicates the degrading operation condition, a bearing fault alert indicating which one of the first bearing and the second bearing is degrading.

4. The arrangement of claim 1, 2 or 3, wherein the first bearing and the second bearing are identical bearings.

5. The arrangement of any preceding claim, wherein the sensor comprises an enclosure, within which at least the means and the vibration measuring elements are installed, the vibration measuring elements being widely-spaced within the enclosure.

6. The arrangement of any preceding claim, wherein
the means for obtaining comprises an analog-to-digital converter, connected to the first vibration measuring element and to the second vibration measuring element and configured to simultaneously sample the vibration measured by the first measuring element to the first vibration values and the vibration measured by the second measuring element and to the second vibration values, and
the means for determining comprises a microcontroller connected to the analog-to-digital converter and configured to determine the status, and when the status indicates the degrading operation condition, which one of the first bearing and the second bearing is degrading.

7. The arrangement of any preceding claim, wherein the sensor further comprises a power supply connected at least to said means.

8. The arrangement of any preceding claim, wherein the vibration measuring elements are accelerometers.

9. The arrangement of any preceding claim, wherein the first vibration values and the second vibration values are vibration signatures.

10. A computer implemented method comprising:
obtaining a first vibration value at a time t from vibration of a motor frame measured by a first vibration measuring element at a first location on the motor frame;
obtaining a second vibration value at the time t from vibration of the motor frame measured by a second vibration measuring element measured at second location, which is nearer a second bearing than the first location, which locates nearer a first bearing, wherein the first bearing and the second bearing are arranged on opposite sides of the motor frame and the first and second locations are on a side of the motor frame that is between the opposite sides;
comparing the first vibration value and the second vibration value to a preset operational limit; and
determining, when the preset operational limit is exceeded, which one of the first bearing and the second bearing is degrading, based at least on the first vibration value and the second vibration value at the time t, wherein the first bearing is degrading when the first vibration value is at the time t higher than the second vibration value, and the second bearing is degrading when the second vibration value is at the time t higher than the first vibration value.

11. The computer implemented method of claim 10, further comprising transmitting a bearing fault alert indicating which one of the first bearing and the second bearing is degrading.

12. The computer implemented method of claim 10 or 11, further comprising:
repeating obtaining first vibration values and second vibration values at a first time interval as long as the preset vibration limit is not exceeded; and
when the preset vibration limit is exceeded, obtaining the first vibration values and the second vibration values at a second time interval that is shorter than the first time interval.

13. The computer implemented method of claim 10, 11 or 12, wherein the first vibration value and the second vibration value are vibration signatures.

14. A sensor comprising means for carrying out any of the methods of claims 10 to 13.

15. The sensor of claim 14, wherein the means comprises at least two accelerometers, an analog-to-digital converter, and a microcontroller, wherein the two accelerometers are connected to the analog-to-digital converter, which is connected to the microcontroller.
